# EUROPEAN PATENT SPECIFICATION

(11) **EP 1 918 656 B1**
(45) Date of publication and mention of the grant of the patent: **29.06.2016**
(21) Application number: 07253725.1
(22) Date of filing: 20.09.2007
(51) Int. Cl.: F24F 7/06, F24F 11/00, F24F 11/04

(54) **Ventilation system**
Belüftungssystem
Système de ventilation

(30) Priority: 31.10.2006 GB 0621621
(43) Date of publication of application: 07.05.2008
(73) Proprietor: NuAire Limited, Caerphilly CF83 1NA (GB)
(72) Inventor: Ngai, Kwok M., Caerphilly CF83 1NA (GB)
(74) Representative: Davies, Gregory Mark

(56) References cited:
- DE-A1- 10 035 829
- DE-A1- 19 963 837
- DE-U1-202004 010 819
- FR-A- 2 746 905
- JP-A- 2001 065 937

## Description

The present invention relates to a ventilation system.

Many buildings are ventilated by active ventilation systems. A typical active ventilation system uses one or more fans to generate a forced airflow through various ventilation ducts and vents in a building. The fans, which are typically mounted within the ducts, are used to control the flow of air from the rooms in the building through the ducts to the outside of the building.

In contrast, passive ventilation systems ventilate buildings without using devices such as fans to generate a forced airflow. Buildings employing passive stack ventilation typically comprise ventilation pipes or ducts (stacks), which extend upwards through the building. Each duct has a lower open end terminating in a room to be vented, typically in the room's ceiling, and an upper open end terminating at the outside of the building, typically at or above the building's roof. Ventilation in a passive stack system is mainly caused by pressure differences resulting from wind flow passing over the building at the upper end of a duct and also pressure differences resulting from temperature differences between indoor and outdoor air. If indoor air temperatures are higher than outdoor air temperatures, the warmer and hence less dense indoor air tends to rise up through the ventilation ducts.

Passive ventilation systems have the advantage of being energy efficient but have the disadvantage that the ventilation rate is dependent upon environmental conditions and so is not easily controllable. Consequently, passive ventilating systems often over or under ventilate a room, depending upon the prevailing weather conditions.

Active ventilating systems have the advantage that the ventilation rate is to a large extent controllable but the disadvantage that energy is of course needed to operate the fans. Active ventilating systems can be expensive to run.

Embodiments of the present invention aim to at least alleviate the above described problems.

According to the present invention there is provided a ventilation system for ventilating an accommodation space, the ventilation system being operable in a passive ventilation mode and an active ventilation mode, the system comprising: a sensor for outputting a signal indicative of an actual air flow rate in the system; a housing having an air outlet; a damper arrangement contained within the housing; a controller for automatically turning on a ventilation fan to switch the system into the active ventilation mode if the actual air flow rate indicated by the sensor signal when the system is in the passive ventilation mode is unable to meet a target air flow rate, and wherein, in the passive ventilation mode and/or the active ventilation mode, the controller controls the damper to modulate the actual air flow rate in dependence upon the sensor's signal to attempt to make the actual air flow rate meet the target air flow rate. The damper arrangement comprises a first damper plate that defines an aperture through which air flowing through the housing can flow and a second damper plate opposing the first damper plate and means for causing relative linear movement between the damper plates to vary the size of the area of the housing through in flows.

Thus advantageously, when conditions permit, the system operates in the energy efficient passive ventilation mode. If conditions do not allow sufficient ventilation in the passive ventilation mode, the fan is activated and the system operates in the active ventilation mode.

Advantageously, in both passive and/or active ventilation modes the airflow rate through the system is controllable.

In the passive ventilation mode this control prevents over ventilation. In the active ventilation mode, the fan may run at the minimum fan speed necessary for the actual flow rate to meet the required flow rate. This minimises energy consumption.

A ventilation system for ventilating an accommodating space is known from JP 2001 065937 A.

An embodiment of the invention will now be described by way of example only with reference to the accompanying drawing in which:
Figure 1 is a schematic diagram of a building comprising a ventilation system embodying the present invention;
Figure 2 is a schematic diagram of a ventilation system embodying the present invention.

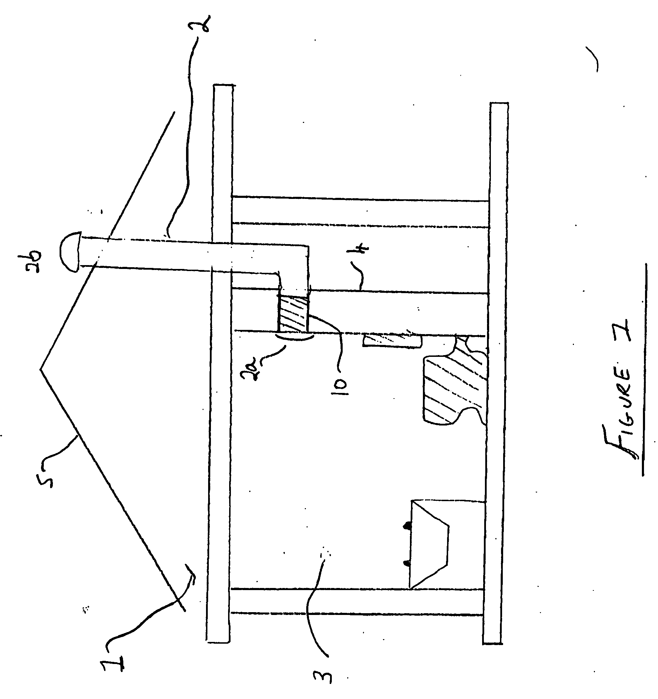

Referring to Figure 1, a ventilating system embodying the present invention is incorporated in a building 1 comprising a ventilation duct 2 for ventilating a room 3. The ventilation duct 2 has a first end 2a at a wall 4, and a second end 2b open to the exterior of the building 1 at a roof 5. The ventilation duct 2 rises upwards from the first end 2a to the second end 2b and defines a path through which air can flow from the room 3 to the building's exterior to ventilate the room 3.

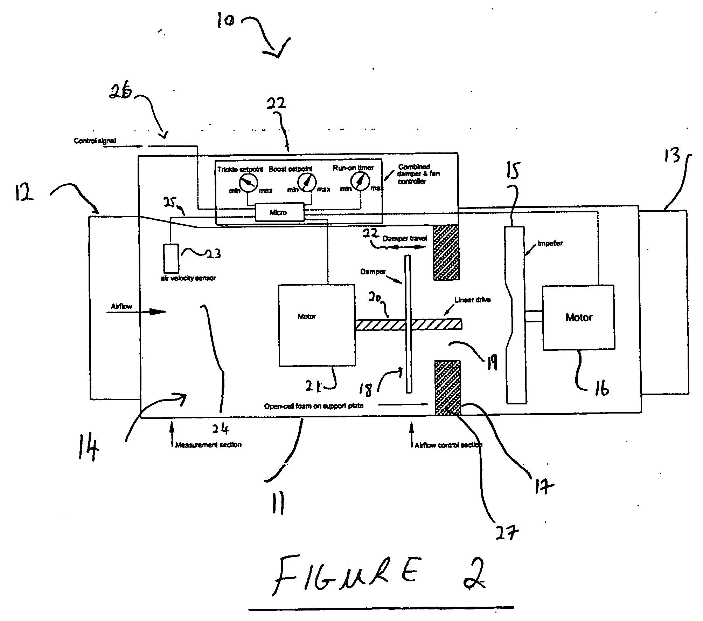

The ventilating system further comprises an airflow control device 10 connected to form part of the duct 2. As illustrated in Figure 2, the airflow control device 10 comprises a housing 11 having an open inlet spigot 12 for mounting to the duct 2 towards the first end 2a and an open outlet spigot 13 for mounting to the duct 2 towards the second end 2b. In use, air flows from the room 3 through the duct 2 and airflow control device 10 and out to the exterior of the building 1.

The airflow control device 10 further comprises an airflow control system 14 for controlling the rate of airflow through the device 10. In some respects, the airflow control system 14 is similar to that described in our copending application GB0606497.6 and is able modulate the airflow rate through the device 10 to maintain the airflow rate at a user selectable rate.

The airflow control device 10 further comprises a fan 15 driveable by a motor 16 and located in the housing 11 upstream of the airflow control system 14. The airflow control device 10 is operable in either a passive ventilation mode or an active ventilation mode. When environmental conditions are such that a user selected flow rate can be met by passive ventilation alone, the airflow control device 10 operates in the passive ventilation mode and the fan is inactive. In this mode, the airflow control system 14 controls the airflow to maintain the airflow at the user selected rate. This control prevents the over ventilation that can occur in traditional passive ventilation systems.

When environmental conditions are such that a user selected flow rate cannot be met by passive ventilation alone, the airflow control system 14 activates the fan 15 and the airflow control device 10 operates in active ventilation mode. In the active ventilation mode, the operation of the fan ensures that the selected airflow rate is met. Again, in this mode, the airflow control system 14 operates to maintain the airflow at the user selected rate.

It will be appreciated that as used in this specification, the term active ventilation refers to ventilation where the air flow results solely from the action of one or more fans, the environmental conditions being such that they provide no assistance at all to the flow of air (or even adversely affect it), and also to ventilation where the air flow results from a combination of the environmental conditions and from the action of one or more fans.

The airflow control system 14 comprises a static damper plate 17 opposing a movable damper plate 18. The static damper plate 17 is mounted at a fixed position within the housing 11 between the fan 15 and the moveable damper plate 18. The static damper plate 17 is co-axial with the housing 11 and has a central aperture 19.

The movable damper plate 18 is mounted on a linear driver 20 within the housing 11 on the inlet side of the static damper plate 17 facing the central aperture 19. The moveable damper plate 18 is also co-axial with the housing 11 and has a diameter greater than that of the central aperture 19.

The linear driver 20 is coupled to a bi-directional motor 21 for driving the moveable damper plate 18 back and forth relative to the static damper plate 17. The moveable damper plate 18 has a travel range 22 and may be moved to any position within this range 22 to control the airflow through the central aperture 19 and hence through the device 10.

The control system 14 further comprises a processor 22 for controlling the motor 21 to position the moveable damper plate 18. In the preferred embodiment, the control system 14 is configured so that the device 10 provides either a user selectable trickle flow rate or a user selectable higher boost flow rate. The target trickle flow rate is a rate appropriate for when the room being ventilated is un-occupied and the boost flow rate a rate appropriate for when the room is occupied.

The device 10 further comprises an air velocity sensor 23 located within the housing 11 on the inlet side of the moveable damper plate 18 in a measurement section 24. The air velocity sensor may typically be a MEMS air velocity sensor (part code D6F-W01A1) as provided by Omron Electronics Components Europe BV of the Netherlands. In use, the air velocity sensor 23 measures the airflow through the measurement section 24, generates a signal 25 indicative of the airflow rate through the section and feeds the signal to the processor 22.

In both the trickle flow rate mode and the boost flow rate mode, the processor 22 processes the signal 25 and controls the motor 21 to position the moveable damper plate 26 so that the actual flow rate through the device 20 meets the set target flow rate. Thus, if it is determined that the actual flow rate is higher (lower) than the target flow rate, the processor 22 controls the motor 21 to move the moveable damper plate 22 closer to (further from) the static damper plate 17 until the measured flow rate meets the target flow rate.

In practice, provided the pressure differential across the device 10 is within a pre-determined range, the target airflow rate can be maintained. The pre-determined pressure differential range will be dependent upon the design of the device 10, in particular the geometry of the air-flow path, the size of the aperture 19 and the range of travel of the moveable damper plate 22.

When environmental conditions permit, the device 10 operates in its passive ventilation mode. If at any time the detected actual flow rate differs from the user selected flow rate (either in trickle mode or in boost mode) the processor 22 controls the motor 21 to position the moveable damper plate 18 until the actual flow rate meets the selected flow rate.

If the environmental conditions are such that the user selected flow rate cannot be met by passive ventilation alone, the detected flow rate will be less than the selected flow rate even when the moveable damper plate 18 is as far from the stationary damper plate 17 as it can be. If this condition occurs, the processor 22 activates the motor 16 to turn on the fan 15 which runs at a rate that enables the selected flow rate to be met.

In one embodiment, the rotation rate of the fan is continuously variable between 0 rpm and a maximum rotation rate. In this embodiment, the processor 22 controls the moveable damper plate 18 and the fan 15 such that the measured flow rate meets the selected flow rate with the fan rotating at the lowest possible rate for this to be possible. Advantageously, running the fan at the lowest possible rate minimize energy costs. If environmental conditions change such that the airflow starts to exceed the target flow rate the controller slows the fan speed until eventually, when conditions permit, the fan is stopped and the system returns to passive ventilation mode.

In an alternative embodiment, the fan 15 is a single speed fan, and the processor 22 simply controls the position of the moveable damper plate 18 so that the measured flow rate meets the selected flow rate.

A control signal 26 from an infra-red motion sensor (not shown) is fed to the processor 22, which selects on the basis of the signal 23 whether the device is to operate at the trickle flow rate (when no motion is detected) or the boost flow rate (when motion is detected). Preferably, the processor 22 is arranged to maintain the device operating at the boost flow rate for a pre-determined time period, say 20 minutes, after the detection of the last movement in the room. This prevents the device 10 needlessly switching to trickle flow rate on occasions that the room is left only momentarily un-occupied. Other means may be used to select whether the device is to operate at trickle flow rate or boost flow rate, for example, a manual switch operated by an occupant or a signal from a Building Management System (BMS) control.

Preferably, the actual target flow rates in both the trickle flow rate setting and the boost flow rate setting may be selected by a user at any desired value between a minimum value and a maximum value by means of a control (not shown) operating potentiometers (not shown). Alternatively, the target flow rates may be selected as any value between the maximum and minimum values by means of a signal (not shown) input from an external sensor (not shown), for example a carbon dioxide sensor measuring the quality of the air in the room.

Preferably, soft compressible material 27, for example open-cell foam or the like, is placed on the static damper plate 17, as illustrated, or alternatively the moveable damper plate 18 or indeed both plates. This material 27 helps prevent a whistling noise otherwise generated when airflow is forced past the dampers. Furthermore, the compressible property of the material allows for fine adjustment of airflow when the moveable damper 18 is driven against the material.

In the described embodiment, the fan 15 is located within the housing 11. Ideally, the fan 15 is shaped and sized so as to provide minimal obstruction to air flow when the device 10 operates in the passive ventilation mode and to provide adequate air flow rate when the device operates in the active ventilation mode. In a typical system the fan 15 may be either a larger diameter (>=200mm) axial fan or a mixed-flow fan driven by an AC/EC motor for best efficiency. Other suitable fans will be known to those skilled in the art.

It is not essential that the fan 15 is located in the housing 11. In an alternative embodiment the fan 15 is located outside of the housing 11 but inside the ventilation duct 2. It will be appreciated that embodiments in which the device 10 contains the fan 15 have the advantage of being more easily installable in buildings 1 than are embodiments in which the fan is located outside of the housing 11.

Many types of alternative sensors to that described herein and which are suitable for generating a signal indicative of air flow rate will be known to those skilled in the art.

## Claims

1. A ventilation system for ventilating an accommodation space (3), the ventilation system being operable in a passive ventilation mode and an active ventilation mode, the system comprising:
a housing (11) having an air inlet and an air outlet;
a damper arrangement contained within the housing;
a sensor (23) for outputting a signal indicative of an actual air flow rate in the system;
a controller (22) for automatically turning on a ventilation fan (15) to switch the system to the active ventilation mode if the actual air flow rate indicated by the sensor signal when the system is in the passive ventilation mode is unable to meet a target air flow rate, and wherein, in the passive ventilation mode and/or the active ventilation mode, the controller controls the damper arrangement to modulates the actual air flow rate in dependence upon the sensor's signal to attempt to make the actual air flow rate meet the target air flow rate, **characterised in that**:
the damper arrangement comprises a first damper plate (17) that defines an aperture (19) through which air flowing through the housing can flow and a second damper plate (18) opposing the first damper plate (17) and means for causing relative linear movement between the damper plates (17, 18) to vary the size of the area of the housing through which air flows.

2. A ventilation system according to claim 1 wherein one of the first and second damper plates (17, 18) is fixed in the housing (11) and the other of the plates is moveable relative to the fixed plate.

3. A ventilation system according to claim 2 wherein the damper arrangement comprises a drive mechanism (16) for reciprocally moving the moveable damper plate relative to the fixed damper plate.

4. A ventilation system according to claim 2 or 3, wherein in the active ventilation mode, the controller (22) controls the damper mechanism and/or the speed of the fan (15) to modulate the rate of flow of air through the housing.

5. A ventilation system according to claim 1, wherein in the active ventilation mode the controller (22) controls the speed of the fan (15) to modulate the rate of flow of air through the housing.

6. A ventilation system according to any preceding claim, the system further comprising the fan (15) controlled by the controller (22).

7. A ventilation system according to any preceeding claim, the system further comprising the fan (15) controlled by the controller (22) and wherein the fan is located in the housing.

8. A ventilation system according to claim 8 wherein the sensor (23) is located in the housing.

9. A ventilation system according to any preceeding claim wherein the controller (22) is configurable to modulate the air flow through the housing to attempt to make the air flow rate meet either a first required rate or a second higher required rate.

10. A ventilation system according to claim 9 wherein the controller (22) is configurable such that the first and second required rates are both selectable between lower and upper limits.

11. A ventilation system according to any of claims 2 to 13 wherein the housing (11) is installable in a ventilation duct in an accommodation structure.

## Patentansprüche

1. Belüftungssystem zum Belüften eines Wohnraums (3), das in einem passiven Belüftungsmodus und einem aktiven Belüftungsmodus betreibbar ist, wobei das System umfasst:
ein Gehäuse (11) mit einem Lufteinlass und einem Luftauslass,
eine in dem Gehäuse enthaltene Dämpfungsanordnung,
einen Sensor (23) zum Ausgeben eines Signals, das eine momentane Luftdurchflussmenge in dem System anzeigt,
eine Steuerungseinheit (22) zum automatischen Einschalten eines Belüftungsgebläses (15), um das System in den aktiven Belüftungsmodus zu schalten, wenn die durch das Sensorsignal angezeigte momentane Luftdurchflussmenge, außer Stande ist, eine Zielluftdurchflussmenge zu erfüllen, wenn das System in dem passiven Belüftungsmodus ist, und wobei in dem passiven Belüftungsmodus und/oder dem aktiven Belüftungsmodus die Steuereinheit die Dämpfungsanordnung steuert, um die momentane Luftdurchflussmenge in Abhängigkeit des Sensorsignals anzupassen, um zu versuchen, dass die momentane Luftdurchflussmenge die Zielluftdurchflussmenge erfüllt, **dadurch gekennzeichnet, dass**
die Dämpfungsanordnung eine erste Dämpferplatte (17), die eine Öffnung (19) definiert, durch die Luft, die durch das Gehäuse strömt, strömen kann, und eine der ersten Dämpferplatte (17) gegenüberliegende zweite Dämpferplatte (18) und Mittel zum Bewirken einer relativen Linearbewegung zwischen den Dämpferplatten (17, 18), um die Größe der Fläche des Gehäuses, durch die Luft strömt, zu varüeren.

2. Belüftungssystem nach Anspruch 1, wobei entweder die erste oder die zweite Dämpferplatte (17, 18) in dem Gehäuse (11) befestigt ist und die andere der Platten relativ zu der befestigten Platte bewegbar ist.

3. Belüftungssystem nach Anspruch 2, wobei die Dämpferanordnung einen Antriebsmechanismus (16) zum Hin- und Herbewegen der beweglichen Dämpferplatte relativ zu der befestigten Dämpferplatte umfasst.

4. Belüftungssystem nach Anspruch 2 oder 3, wobei in dem aktiven Belüftungsmodus die Steuereinheit (22) den Dämpfermechanismus und/oder die Geschwindigkeit des Gebläses (15) steuert, um die Durchflussmenge von Luft durch das Gehäuse anzupassen.

5. Belüftungssystem nach Anspruch 1, wobei in dem aktiven Belüftungsmodus die Steuereinheit (22) die Geschwindigkeit des Gebläses (15) steuert, um die Durchflussmenge von Luft durch das Gehäuse anzupassen.

6. Belüftungssystem nach einem der vorstehenden Ansprüche, wobei das System des Weiteren umfasst, dass das Gebläse (15) durch die Steuereinheit (22) gesteuert wird.

7. Belüftungssystem nach einem der vorstehenden Ansprüche, wobei das System des Weiteren umfasst, dass das Gebläse (15) durch die Steuereinheit (22) gesteuert wird und wobei das Gebläse in dem Gehäuse angeordnet ist.

8. Belüftungssystem nach Anspruch 8, wobei der Sensor (23) in dem Gehäuse angeordnet ist.

9. Belüftungssystem nach einem der vorstehenden Ansprüche, wobei die Steuereinheit (22) konfigurierbar ist, um den Luftstrom durch das Gehäuse anzupassen, um zu versuchen, dass die Luftdurchflussmenge entweder eine erste erforderliche Menge oder eine zweite höhere erforderliche Menge erfüllt.

10. Belüftungssystem nach Anspruch 9, wobei die Steuereinheit (22) konfigurierbar ist, sodass die erste und zweite erforderliche Menge beide zwischen einem unteren und einem oberen Grenzwert auswählbar sind.

11. Belüftungssystem nach einem der Ansprüche 2 bis 13, wobei das Gehäuse (11) in einem Belüftungskanal in einem Wohngebäude installierbar ist.

## Revendications

1. Système de ventilation pour la ventilation d'un espace d'hébergement (3), le système de ventilation étant fonctionnel dans un mode de ventilation passif et un mode de ventilation actif, le système comprenant :
un boîtier (11) présentant une entrée d'air et une sortie d'air ;
un agencement d'amortissement contenu dans le boîtier ;
un capteur (23) pour délivrer un signal indiquant un débit d'air réel dans le système ;
un contrôleur (22) pour allumer automatiquement un ventilateur (15) afin de commuter le système en mode de ventilation actif si le débit d'air réel indiqué par le signal de capteur, lorsque le système est dans le mode de ventilation passif, est incapable d'atteindre un débit d'air cible, et dans lequel dans le mode de ventilation passif et/ou le mode de ventilation actif, le contrôleur commande l'agencement d'amortissement pour moduler le débit d'air réel selon le signal de capteur afin d'essayer d'amener le débit d'air réel à atteindre le débit d'air cible, **caractérisé en ce que** :
l'agencement d'amortissement comprend une première plaque d'amortissement (17) qui définit une ouverture (19), au travers de laquelle de l'air passant par le boîtier peut s'écouler et une seconde plaque d'amortissement (18) en regard de la première plaque d'amortissement (17) et des moyens pour amener le mouvement linéaire relatif entre les plaques d'amortissement (17, 18) à varier la taille de la zone du boîtier, par lequel l'air passe.

2. Système de ventilation selon la revendication 1, dans lequel une des première et seconde plaques d'amortissement (17, 18) est fixée dans le boîtier (11) et l'autre des plaques est mobile par rapport à la plaque fixée.

3. Système de ventilation selon la revendication 2, dans lequel l'agencement d'amortissement comprend un mécanisme d'entraînement (16) pour déplacer alternativement la plaque d'amortissement mobile par rapport à la plaque d'amortissement fixée.

4. Système de ventilation selon la revendication 2 ou 3, dans lequel dans le mode de ventilation actif, le contrôleur (22) commande le mécanisme d'amortissement et/ou la vitesse du ventilateur (15) pour moduler le débit de flux d'air passant par le boîtier.

5. Système de ventilation selon la revendication 1, dans lequel dans le mode de ventilation actif, le contrôleur (22) commande la vitesse du ventilateur (15) pour moduler le débit de flux d'air passant par le boîtier.

6. Système de ventilation selon l'une quelconque des revendications précédentes, le système comprenant en outre le ventilateur (15) commandé par le contrôleur (22) .

7. Système de ventilation selon l'une quelconque des revendications précédentes, le système comprenant en outre le ventilateur (15) commandé par le contrôleur (22) et dans lequel le ventilateur est situé dans le boîtier.

8. Système de ventilation selon la revendication 8, dans lequel le capteur (23) est situé dans le boîtier.

9. Système de ventilation selon l'une quelconque des revendications précédentes, dans lequel le contrôleur (22) est configurable pour moduler le flux d'air passant par le boîtier afin d'essayer d'amener le débit d'air à atteindre un premier débit requis ou un second débit requis supérieur.

10. Système de ventilation selon la revendication 9, dans lequel le contrôleur (22) est configurable de sorte que les premier et second débits requis soient tous les deux sélectionnables entre des limites inférieure et supérieure.

11. Système de ventilation selon l'une quelconque des revendications 2 à 13, dans lequel le boîtier (11) est installable dans un conduit de ventilation dans une structure d'hébergement.
